# EUROPEAN PATENT APPLICATION

(11) **EP 0 786 891 A2**
(43) Date of publication of application: **30.07.1997**
(21) Application number: 97101075.6
(22) Date of filing: 24.01.1997
(51) Int. Cl.: H04M 3/50, H04M 3/46

(54) **Method and autoconnect system for connecting outdialed calls to agents**

(30) Priority: 26.01.1996 US 592815
(71) Applicant: ROCKWELL INTERNATIONAL CORPORATION, Seal Beach, California 90740-8250 (US)
(72) Inventor: Koenig, Peter J., Downers Grove, IL 60515 (US); Werve, Timothy P., Geneva, IL 60134 (US)
(74) Representative: Blum, Rudolf Emil Ernst

(57) **Abstract**

An autoconnect system 100 connects agent telephonic units 114 to external telephonic units 104 through a telephonic switch 102. The autoconnect system 100 comprises an agent terminal 112 for displaying information relating to telephone calls to agents and a computer system 108 for transmitting instructions from the agent terminal 112 to the telephonic switch 102. The autoconnect system 100 further comprises a tone generator 118 and headset 116 for providing telephone calls to an associated agent. The telephonic switch 102 outdials telephone calls in response to instructions from the computer system 108. When an individual answers the telephone call, the telephonic switch 102 drops the telephone call into the agent telephonic unit 114. Preferably, a zip tone is transmitted to the agent telephonic unit 114 prior to the telephone call.

## Description

### Background of the Invention

The present invention relates generally to an autoconnect system and method for automatically connecting agents to telephone calls outdialed from a telephonic switch wherein the telephone calls are dropped in to the agent telephones without ringing the agent telephones.

In an effort to solicit new customers and maintain existing customers, businesses are continually striving to improve customer service. An important part of customer service is the business' ability to efficiently handle customer orders, complaints and the like over the telephone. Accordingly, businesses are increasingly using telephonic switches, such as private branch exchanges (PBXs) and automatic call distributors (ACDs) to route incoming telephone calls to the appropriate agents and to outdail potential customers.

A telephonic switch typically consists of a multiport switch which routes calls to one or more available agents under the control of a central processing unit. Each of the agents has access to a telephonic unit for receiving telephone calls. The telephonic unit generally includes a numeric keypad and a few special functional pushbuttons. An agent might use, for example, a special function pushbutton to release a connected call, place a call on hold or remove a call from hold.

During an outdial procedure, the telephonic switch dials selected telephone numbers obtained, for example, from a computer data base. Typically, the telephonic switch detects when a called party answers the telephone and then rings an agent. When the agent answers the ring, the agent and the called party are connected. Unfortunately, a delay occurs between the time the call is connected to the called party and the time the agent answers the ring. If the call is connected to the agent's telephonic unit in the middle of a ring cycle, the time delay could be four seconds. With this long of a delay, the called party may hang up before the agent answers the call.

For the foregoing reasons, there is a need for an improved autoconnect system and method for automatically connecting agents to outdialed telephone calls from a telephonic switch wherein the telephone calls are dropped in to the agents' telephonic units.

### Summary of the Invention

This need is satisfied by a method and autoconnect system for establishing a telephone call between an external telephonic unit and an agent telephonic unit wherein the telephone call is dropped in to agent telephones via a telephonic switch in accordance with the present invention.

In accordance with one aspect of the present invention, a method establishing a telephone call between an external telephonic unit and an agent telephonic unit comprises the steps of: placing the agent telephonic unit in an available and off hook condition; calling the external telephonic unit by a telephonic switch; establishing the telephone call between the external telephonic unit and the telephonic switch; and connecting the agent telephonic unit to the external telephonic unit through the telephonic switch. The step of placing an agent telephonic unit in an available and off hook condition may preferably comprise the steps of: signaling to a computer system that the agent telephonic unit is signing in; signaling from the computer system to the telephonic switch to sign in the agent telephonic unit in the off hook condition; and signaling from the computer system to the telephonic switch that the agent telephonic unit is available.

In accordance with another aspect of the present invention, an autoconnect system establishes a telephone call between a external telephonic unit and an agent telephonic unit via a telephonic switch. The system comprises a computer system for prompting the telephonic switch to establish the telephone call with the external telephonic unit, for detecting when the telephone call is established with the external telephonic unit and for dropping in the telephone call to the agent telephonic unit. The autoconnect system preferably comprises a head set and a tone generator for receiving voice signals from the telephonic switch and for formatting the voice signals for proper receipt by the headset.

These and other features and advantages of the present invention will become apparent from the following detailed description, the accompanying drawings and the appended claims.

### Brief Description of the Drawings

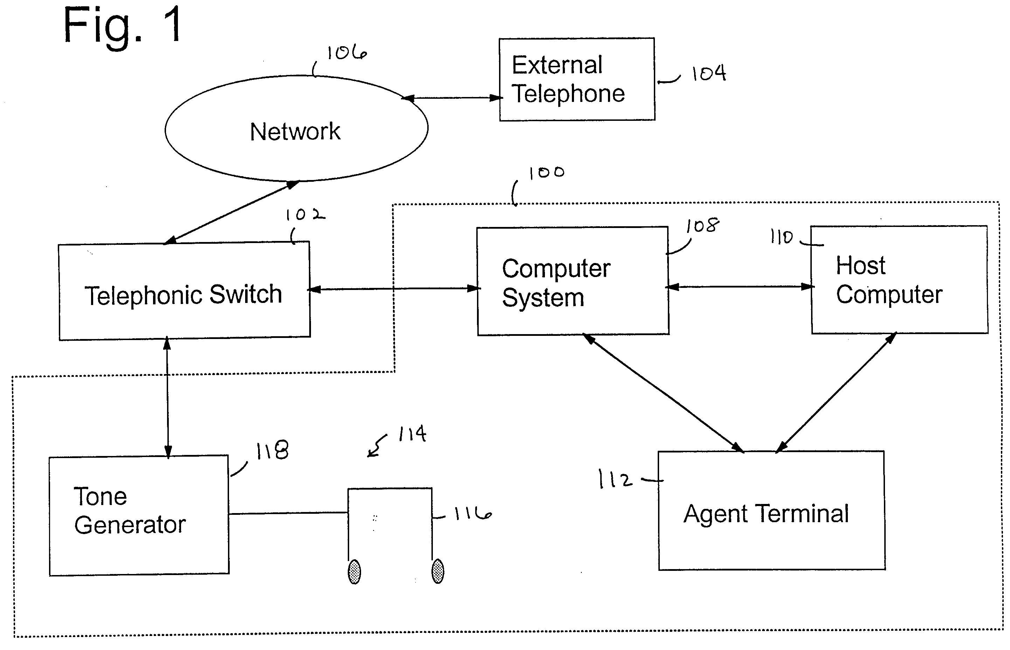

Fig. 1 is a block diagram of an autoconnect system for connecting telephone calls to agent telephonic units through a telephonic switch in accordance with the present invention.

### Detailed Description of the Invention

An autoconnect system 100 substantially automatically establishes telephone calls between external telephonic units 104 and agents through a network 106. A telephonic switch 102, such as a PBX or ACD, outdials the external telephonic units 104 and connects the appropriate agent to any individual telephone call. The autoconnect system 100 includes a computer system 108 for sending instructions to the telephonic system 102 and a host computer 110 for storing information relating to incoming telephone calls. The computer system 108 and host computer 110 are connected to an agent terminal 112 associated with an agent for displaying information to the agent and for transmitting instructions to the computer system 108. The agent also has access to a agent telephonic unit 114 which includes, for example, a headset 116 and a tone generator 118 for providing audio communications with the agent. Exemplary telephonic switches in which the present invention may be advantageously implemented are disclosed in U.S. Patent No. 5,268,903, issued to Jones et al., entitled "Multichannel Telephonic Switching Network With Different Signaling Formats and CrossConnect/PBX Treatment Selectable For Each Channel", issued on December 7, 1993 and U.S. Patent No. 5,140,611, issued to Jones et al., entitled "Pulse Width Modulated Self-Clocking and Self-Synchronizing Data Transmission and Method for a Telephonic Communication Network Switching System", issued on August 18, 1992, the disclosures of which are hereby incorporated by reference.

During a typical outdial procedure, the computer system 108 obtains a telephone number from the host computer 110 to outdial. As will be apparent to those skilled in the art, the computer system 108 and the host computer 110 contain various computer circuits and memory devices and may be a single computer unit. The telephonic switch 102 then outdials the selected telephone number and awaits an answer of the external telephonic unit 104. The telephonic switch 102 detects when a called party answers the external telephonic unit 104 and stores the call in queue awaiting connection to the agent telephonic unit 114. The telephonic switch 102 then connects the call to the agent to establish communications between the agent and the called party. One predictive outdial method is disclosed in commonly assigned U.S. Patent No. 4,881,261 issued to Oliphant et al., entitled "Method For Predictive Pacing of Calls in a Calling System", the disclosure of which is hereby incorporated of reference.

Preferably, the telephonic switch 102 signals to the computer system 108 that the call is in queue and sends information relating to the call to the computer system 108. The computer system 108 working in tandem with the host computer 110 retrieves information relating to the call and transmits the information to the agent terminal 112 for display to the agent handling the call.

In accordance with the present invention, the autoconnect system 100 connects the agent to the outdialed telephone call by prompting the telephonic switch 102 to drop the telephone call into the agent telephonic unit 114. In an exemplary procedure, an agent signs in to the telephonic switch 102. During sign in, the agent enters the appropriate sequence of digits in the agent terminal 112 which is transmitted to the computer system 108. The agent terminal 112 displays a signed in message to the agent when properly signed in. An agent status signal is sent from the telephonic switch 102 to the computer system 108 indicating that the agent is offhook.

The computer system 108 next requests that the telephonic switch 102 make the agent available to receive telephone calls. The agent is now considered offhook and available by the telephonic switch 102 and the computer system 108. The computer system 108 next instructs the telephonic switch to place an outdialed telephone call to the external telephonic unit 104. The telephonic switch 102 dials the telephone call and places the telephone call in queue when the called party answers.

Substantially simultaneously with the telephone call being answered by the called party, the telephonic switch 102 automatically drops the telephone call into the agent telephonic unit 114 to establish voice communications with the agent. Since the call is automatically dropped in to the agent telephonic unit 114, the agent does not need to answer any ringing or the like. The telephonic switch 102 may send a zip tone to the agent telephonic switch before dropping in the telephone call to notify the agent.

The agent terminal 112 preferably displays information relating to the telephone call substantially simultaneously with the telephone call being dropped in to the agent telephonic unit 114. When the called party or agent disconnects the telephone call, the telephonic switch 102 disconnects the other party. The telephonic unit 102 delays one second and thereafter makes the agent available for another call.

Having thus described the invention in detail by way of reference to preferred embodiments thereof, it will be apparent that other modifications and variations are possible without departing from the scope of the invention delined in the appended claims. For example, the agent telephonic unit 114 may have a design configuration which departs from that described herein. Therefore, the spirit and scope of the appended claims should not be limited to the description of the preferred versions contained herein.

## Claims

1. A method for establishing a telephone call between an external telephonic unit and an agent telephonic unit comprising the steps of:
placing the agent telephonic unit in an available and off hook condition;
calling the external telephonic unit by a telephonic switch;
establishing the telephone call between the external telephonic unit and the telephonic switch; and
connecting the agent telephonic unit to the external telephonic unit through the telephonic switch.

2. The method as recited in claim 1 wherein the step of placing an agent telephonic unit comprises the steps of:
signaling to a computer system that the agent telephonic unit is signing in;
signaling from the computer system to the telephonic switch to sign in the agent telephonic unit in the off hook condition; and
signaling from the computer system to the telephonic switch that the agent telephonic unit is available.

3. The method as recited in claim 1 wherein the step of outdialing the external telephonic unit comprises the step of:
dialing the external telephonic unit in response to instructions from a computer system.

4. The method as recited in claim 3 wherein the step of establishing communications comprises the steps of:
detecting when the external telephonic unit is answered; and
placing the telephone call in queue awaiting connection to the agent telephonic unit.

5. The method as recited in claim 4 comprising the steps of:
signaling to the computer system when the telephone call is in queue; and
downloading information to an agent terminal associated with the agent telephonic unit, the information being related to the telephone call.

6. The method as recited in claim 5 wherein the step of downloading comprises the step of:
downloading the information substantially simultaneously with connecting the agent telephonic unit to the external telephonic unit through the telephonic switch.

7. The method as recited in claim 1 wherein the step of connecting comprises the step of:
providing a zip tone to the agent telephonic unit indicating that the telephone call is being connected.

8. An autoconnect system for establishing a telephone call between an external telephonic unit and an agent telephonic unit via a telephonic switch, the system comprising:
a computer system for prompting the telephonic switch to establish the telephone call with the external telephonic unit, for detecting when the telephone call is established with the external telephonic unit and for dropping in the telephone call to the agent telephonic unit.

9. The autoconnect system as recited in claim 8 comprising:
a headset; and
a tone generator for receiving voice signals from the telephonic switch and for formatting the voice signals for proper receipt by the headset.

10. The autoconnect system as recited in claim 8 comprising:
an agent terminal associated with the agent telephonic unit for displaying information relating to the telephone call.

11. The autoconnect system as recited in claim 10 comprising:
a host computer for storing the information relating to the telephone call and for supplying the information to the agent terminal for display.

12. A method for establishing a telephone call between an agent telephonic unit and an external telephonic unit by a telephonic switch, the method comprising the steps of:
establishing communications between the telephonic switch and the external telephonic unit; and
dropping in the communications to the agent telephonic unit to establish the telephone call between the agent telephonic unit and the external telephonic unit.

13. The method as recited in claim 12 comprising the step of:
providing a zip tone to the agent telephonic unit indicating that the telephone call is being dropped in.

14. The method as recited in claim 12 wherein the step of establishing the telephone call comprises the steps of:
signaling to a computer system that the agent telephonic unit is signing in;
signaling from the computer system to the telephonic switch to sign in the agent in the off hook condition; and
signaling from the computer system to the telephonic switch that the agent is available.

15. The method as recited in claim 14 wherein the step of establishing communications between the telephonic switch and the external telephonic unit comprises the step of:
dialing the external telephonic unit in response to instructions from the computer system.

16. The method as recited in claim 15 comprising the step of:
detecting when the external telephonic unit is answered; and
placing the telephone call in queue awaiting connection to the agent telephonic unit.

17. The method as recited in 16 comprising the steps of:
signaling to the computer system when the telephone call is in queue; and
downloading information relating to the telephone call to an agent terminal associated with the agent telephonic unit.
